# EUROPEAN PATENT APPLICATION

(11) **EP 1 435 590 A1**
(43) Date of publication of application: **07.07.2004**
(21) Application number: 02775231.0
(22) Date of filing: 25.09.2002
(51) Int. Cl.: G06T 15/40

(54) **IMAGE CREATION APPARATUS AND COMPUTER PROGRAM**

(30) Priority: 26.09.2001 JP 2001295167
(71) Applicant: Pioneer Corporation, Tokyo 153-8654 (JP)
(72) Inventor: MATSUMOTO, Reiji, PIONEER CORP., Sougou Kenkyusyo, Tsurugashima-shi, Saitama 350-2288 (JP); ADACHI, Hajime, PIONEER CORP., Sougou Kenkyusyo, Tsurugashima-shi, Saitama 350-2288 (JP)
(74) Representative: Haley, Stephen
(86) International application number: PCT/JP2002/009845
(87) International publication number: WO 2003/027959

(57) **Abstract**

An image generating apparatus (1) is provided with a graphics memory (16) and a drawing device (13). The graphics memory (16) includes a plurality of frame buffers 16a and 16b, and further includes one Z buffer 16c disposed commonly for these frame buffers. The drawing device 13 sequentially generates a plurality of layers of images sequentially while applying thereto a hidden surface removal using the one Z buffer in a time sharing manner, and sequentially stores these plurality of layers of images into the plurality of frame buffers 16a and 16b, and overlapping these plurality of layers of images that are stored in these frame buffers and to which the hidden surface removal has been applied, to thereby generate a multilayer 3D image.

## Description

### Technical Field

The present invention relates to an image generating apparatus for and method of generating a three-dimensional (3D) image on the basis of three-dimensional coordinate information, an electronic equipment such as a navigation system incorporating such an image generating apparatus, and a computer program. More specifically, the present invention relates to an image generating apparatus and method capable of displaying a multilayer 3D image generated by superimposing a plurality of layers of images containing a 3D image and suitable for a use in on-vehicle navigation systems or the like, and relates to an electronic equipment incorporating such an apparatus, and further relates to a computer program.

### Background Art

Recently, there is remarkable R&D (research and development) about electronic equipments for controlling a motion of a car as well as remarkable popularization of navigation systems to assist a car driving. The navigation system has a fundamental configuration, including various databases, for displaying map information, current position information, various guidance information and the like on a display unit. Furthermore, it is typically for the navigation system to search a drive route on the basis of an entered condition. It is further designed so as to display the searched drive route and a current position based on a GPS (Global Positioning System) measurement or a self-contained measurement on a map and carry out guidance (navigation) to a destination. On the display unit of the navigation system that is mounted on a vehicle for the guidance (navigation) to the destination, a sight ahead of a current driving point is displayed, in addition to the drive route, and further an instruction for a driving lane, a direction to go in an intersection, a distance to the intersection, a distance to a destination, arrival time estimation and so on are displayed. Then, the sight ahead of the current driving point may be displayed in such a manner so as to give a three-dimensional visual effect on a plane, i.e. displayed as an image in perspective (herein referred to as so-called "3D image"), on the basis of the driver's visual line.

In order to display such a 3D image, a drawing engine having a hidden surface removal function in a Z buffer method may be employed. In the Z buffer method, the frontmost image part at the same drawing position of a plurality of partial frame images constituting one frame 3D image (e.g. an image of a road, an image of a building, an image of another building, an image of sky or the like constituting a frame image for depicting a scene) is stored for every drawing position, and one frame 3D image made of only the frontmost image parts for every drawing position is obtained in the end. Furthermore, according to the hidden surface removal function in the Z buffer method, it is possible to generate a 3D image for which not only scenes, but also multiple texts, marks, patterns, designs, drawings, backgrounds or the like are stereoscopically overlapped, for example.

On the other hand, there is a conventional technique for displaying an image for which different kinds of a plurality of layers of images are overlapped in one display screen (hereinafter referred to as a "multilayer image"). For example, in on-vehicle navigation systems, a technique for displaying a multilayer image for which various image information other than map, the relating text information, various icons or marks, map information of different scales or the like are overlapped on a base map information is put into practice. In this technique, more specifically, a plurality of frame buffers are prepared in correspondence with the total number of layers of the multilayer image, and a plurality of images stored in these plurality of frame buffers are overlapped to display the multiple image.

Therefore, it is prospected that a combination of the aforementioned Z buffer method for generating the 3D image using the hidden surface removal technique and the aforementioned technique for displaying the multilayer image allows displaying a complicated and sophisticated multilayer image made of overlapped a plurality of layers of images including a 3D image (this complicated and sophisticated multilayer image is hereinafter referred to as a "multilayer 3D image").

With regard to various electronic equipments, including navigation systems for vehicle, reduction in required memory volume is generally required to perform the same processing from a view point of cost reduction or hardware resource saving.

However, in order to display the multilayer image such as the multilayer 3D image by overlapping a plurality of layers after performing the hidden surface removal in the Z buffer method for each layer as mentioned above, a pair of a frame buffer and a Z buffer is required for each layer of the multilayer image. That is, the number of frame buffers corresponding to the total number of layers of the multilayer image and the number of Z buffers corresponding to the total number of layers of the multilayer image are required, and thereby the required memory volume becomes disadvantageously enormous as a whole.

For example, in the Direct 3D of Microsoft Corp., which is a 3D image graphics library using the Z buffer method, since only one frame buffer is associated to the Z buffer, the Z buffers whose total number corresponds to the total number of layers are required, in order to generate a 3D image for a plurality of layers of images. On the other hand, in the Open GL, an API (Application Programming Interface) of Silicon Graphics, Inc., which is another 3D image graphics library, since it is designed from a concept of single layer, the multilayer 3D image can not be generated.

### Summary of The Invention

The present invention has been accomplished in view of the above problems and aims to provide an image generating apparatus and method capable of displaying a multilayer image including a multilayer 3D image and capable of achieving relative reduction in a required memory volume as a whole, to provide an electronic equipments incorporating such an image generating apparatus and to provide a computer program.

The image generating apparatus according to the present invention in order to solve the above problems is provided with: a graphics memory including (i) a plurality of frame buffers for storing a plurality of layers of images including a 3D image separately and (ii) one Z buffer commonly disposed for the plurality of frame buffers; and a drawing device for (I) sequentially generating the plurality of layers of images while applying thereto a hidden surface removal using said one Z buffer in a time sharing manner, (II) sequentially storing the plurality of layers of images into the plurality of frame buffers, and (III) overlapping the plurality of layers of images that are stored in the plurality of frame buffers and to which the hidden surface removal has been applied, to thereby generate a multilayer 3D image.

According to the image generating apparatus of the present invention, the drawing device sequentially generates a plurality of layers of images including a 3D image, while applying to them a hidden surface removal using a single Z buffer in a time sharing manner, and sequentially stores them into a plurality of frame buffers. Then, each of the plurality of frame buffers is in a state that the 3D image or the like for which the hidden surface removal has been applied in the Z buffer method is stored. Then, the drawing device generates the multilayer 3D image by overlapping the plurality of layers of images including the 3D image, which are stored in the plurality of frame buffers to which the hidden surface removal has been applied. Therefore, the plurality of layers of images generated respectively in the Z buffer method can be overlapped and displayed in the same display screen. Particularly, the graphics memory is provided with the plurality of frame buffers for storing the plurality of layers of images respectively, and provided with one Z buffer disposed commonly for the plurality of frame buffers. Therefore, the required memory volume can be remarkably reduced, in comparison with the case that a plurality of Z buffers are disposed for each of the plurality of layers of images, respectively.

As a result, the image generating apparatus according to the present invention is suitable for a use in car navigation systems or the like, in which reduction in the graphics memory is very important in practice.

In an aspect of the image generating apparatus according to the present invention, the Z buffer is cleared every time when generation of each of the plurality of layers of images is completed by the drawing device.

According to this aspect, since the Z buffer is cleared every time when generation of each of the plurality of layers of images is completed, the hidden surface removal can be performed without problems for the plurality of layers of images, using one Z buffer in the time sharing manner.

In another aspect of the image generating apparatus according to the present invention, the drawing device generates an image in perspective with regard to at least one layer of the plurality of layers of images.

According to this aspect, with regard to at least one layer of the multilayer 3D image, a scene imitating one that the driver views from the driver's seat is displayed as a 3D image in perspective, and thereby the driver can recognize easily the image in association with the real scene.

In another aspect of the image generating apparatus according to the present invention, the apparatus is further provided with: a drawing application processor including (i) a drawing object information generating device for generating drawing object information to generate an image for each object in a single coordinate system by a predetermined unit, on the basis of three-dimensional coordinate information about the object included in the 3D image, with regard to at least one layer of the plurality of layers of images, and (ii) a coordinate transformation information generating device for generating coordinate transformation information to define at least a visual point and a visual range for generating the 3D image; a graphics library including a drawing object information storing device for storing the generated drawing object information and a coordinate transformation storage device for storing the generated coordinate transformation information, wherein the drawing device generates the plurality of layers of images sequentially by incorporating the stored drawing object information into the stored coordinate transformation information by the predetermined unit.

According to this aspect, the drawing application processor and the graphics library generate, store and manage data for generating an image, the data being divided into the coordinate transformation information and the drawing object information, for at least one layer, preferably every layer of the plurality of layers of images, with respective information generating device. On the basis of these stored and managed data, the drawing device generates a 3D image as a display image, and outputs it to the display unit. Relating to this, handling separately the coordinate transformation information and the drawing object information and performing the drawing process based on these information in a batch processing improve the drawing speed of the drawing device.

Particularly, using the drawing object information and the coordinate transformation information as in this aspect allows a layer of 3D image to be generated in a burst-like mode, and thereby a time period required for performing the hidden surface removal in the Z buffer method to generate the layer of 3D image can be shortened. For this, the hidden surface removal for every image layer can be performed without problems using one Z buffer in the time sharing manner.

Incidentally, in this aspect, with regard to an expression "the drawing object information is generated in a single coordinate system for every predetermined information unit", "predetermined information unit" herein may be a group of display list, which corresponds to a unit by which the coordinate transformation information is incorporated into the drawing object information when the drawing device generates the 3D image. Then, although the coordinate system is united in the same predetermined information unit such as the same display list, the coordinate system is not necessarily united in different predetermined information units.

In an aspect including the aforementioned drawing application processor and graphics library, the drawing application processor may be arranged 5.the drawing application processor re-generates the coordinate transformation information, while the drawing object information is maintained, with regard to an object included in both of two 3D images in series that change sequentially with the course of time, for at least one layer of the plurality of layers of images.

In this arrangement, with regard to at least one layer of the plurality of layers of images, when the 3D images that change sequentially with the course of time are generated, the coordinate transformation information is changed while the drawing object information is maintained and thereby the workload for the image generation can be reduced, and the 3D images that change with the course of time can be generated promptly. For example, on the basis of the same drawing object information, images that change sequentially as movement of a vehicle is obtained by changing the visual point continuously, and further images in which a change or the like of the shading of objects is continuous with the course of time is obtained by changing the light source continuously.

In the aspect including the aforementioned drawing application processor and graphics library, the drawing application processor and the graphics library generate and store the drawing object information and the coordinate transformation information about the plurality of layers of images in a multi-task mode.

In this arrangement, since the coordinate transformation information and the drawing object information are generated and stored individually in a multi-task manner, a 3D image can be generated more promptly as a whole.

In the aspect including the aforementioned drawing application processor and graphics library, with regard to at least one layer of the plurality of layers of images, a plurality of coordinate transformation information generated by the coordinate transformation information generating device are stored into the coordinate transformation information storage device, a plurality of drawing object informations generated by the drawing object information generating device is stored in the drawing object information storing device, and the drawing device generates an image from a desired combination of the coordinate transformation information and the drawing object information.

In this arrangement, with regard to at least one layer of the plurality of layers of images including the 3D image, the drawing device can generate the image from any combination of some of the stored coordinate transformation information and some of the stored drawing object information, and thereby the display image can be displayed promptly and in various images in response to the user's request.

In the aspect including the aforementioned drawing application processor and graphics library, the drawing application processor executes a list preparation program for preparing the drawing object information, a clear program for clearing the Z buffer, and a execution instruction program for instructing a drawing execution in said drawing device.

In this arrangement, since it has (i) the list preparation program for preparing the so-called display list and (ii) the clear program for clearing the Z buffer, the multilayer 3D image can be generated relatively easily in the drawing device, for which the plurality of frame buffers uses a single Z buffer in the time sharing manner.

In the aspect including the aforementioned drawing application processor and graphics library, the graphics library has a function for managing the drawing object information, a function for controlling said graphics memory, and a function for controlling said drawing device.

In this arrangement, owing to the function of the graphics library for managing the drawing object information, the function of the graphics library for controlling the graphics library, and the function of the graphics library for controlling the drawing device, the multilayer 3D image that the drawing device generates actually is controlled.

In the aspect including the aforementioned drawing application processor and graphics library, the drawing application processor has a function in which map information including the three-dimensional coordinate information is supplied from a map database provided for a navigation system, with regard to at least one layer of the plurality of layes of images.

In this arrangement, with regard to at least one layer of the plurality of layers of images, on the basis of the map information from the map database, further on the basis of current position information about the vehicle from a GPS positioning system or the like of the navigation system, otherwise on the basis of route information inputted by the driver, an image based on the map information including three-dimensional coordinate information for which the predetermined coordinate transformation is executed is displayed on the display, as one layer constituting the multilayer 3D image. Furthermore, guide information that does not involve the coordinate transformation may be displayed on the map information, as another layer constituting the multilayer 3D image, for convenience of the driver.

In the aspect including the aforementioned drawing application processor and graphics library, the coordinate transformation information includes information to define a light source, in addition to information to define the visual point and the visual range, with regard to at least one layer of the plurality of layers of images.

In this arrangement, the drawing object information can be displayed as more real image, by being transformed on the basis of the light source information in addition to the visual point information and the visual range information, as the coordinate transformation information, with regard to at least one layer of the plurality of layers of images. Furthermore, even if the drawing device is replaced, the visual point information, the visual range information, the light source information and the like can be used as they are, and thereby more real image is ensured while the portability is maintained.

In the aspect including the aforementioned drawing application processor and graphics library, the visual point is set on the basis of a visual point of a driver of a vehicle, with regard to at least one layer of the plurality of layers of images.

In this arrangement, with regard to at least one layer of the plurality of layers of images, a scene imitating one that the driver views is displayed as a 3D image, and the driver can recognize easily the image as a stereoscopic image in association with the real scene. The visual point may be set manually.

In the aspect including the aforementioned drawing application processor and graphics library, the visual range is set on the basis of a visual range of a driver of a vehicle, with regard to at least one layer of the plurality of layers of images.

In this arrangement, with regard to at least one layer of the plurality of layers of images, a scene within the visual range of the driver is displayed as a 3D image. The visual range may be set manually.

The electronic equipment according to the present invention in order to solve the aforementioned problem is provided with: the image generating apparatus discussed above (including various aspects thereof); a display device for visually outputting a multilayer 3D image generated by said drawing device.

According to the electronic equipment of the present invention, since the aforementioned image generating apparatus according to the present invention is employed, various electronic equipments, including navigation systems such as on-vehicle navigation systems capable of displaying the multilayer 3D image, game machines such as arcade games or TV games, computers such as personal computers capable of displaying the multilayer 3D image and the like can be achieved.

The computer program according to the present invention in order to solve the aforementioned problem makes a computer function as aforementioned image generating apparatus according to the present invention (including its various aspects). Specifically, it serves a computer as the aforementioned graphics memory, the drawing device, the drawing application processor, the graphics library and the like according to the present invention, and more specifically serves as the aforementioned drawing object information generating device, the coordinate transformation information generating device, the drawing object information storing device, the coordinate transformation storage device and the like.

According to the computer program of the present invention, an integrated control for the aforementioned image generating apparatus according to the present invention can be achieved relatively easily, by loading the computer program from a record medium such as a CD-ROM (Compact Disc Read Only Memory), a DVD-ROM (DVD Read Only Memory), a hard disk or the like, which stores the computer program, into the computer and executing the program, otherwise by downloading the computer program into the computer via a communication device and executing the program.

An image generation method according to the present invention in order to the above problems is an image generation method performed by an image generating apparatus having (i) a graphics memory including a plurality of frame buffers for storing a plurality of layers of images including a 3D image separately, and (ii) a drawing device for generating a multilayer 3D image by overlapping the plurality of layers of images, wherein the method is provided with a process of sequentially generating the plurality of layers of images while applying thereto a hidden surface removal using said one Z buffer in a time sharing manner, and sequentially storing the plurality of layers of images into the plurality of frame buffers, and a process of overlapping the plurality of layers of images that are stored in the plurality of frame buffers and to which the hidden surface removal has been applied.

According to the image generation method of the present invention, similarly to the case of the image generating apparatus according to the present invention mentioned above, the plurality of layers of images including the 3D images each of which is generated respectively in the Z buffer method can be overlapped and displayed on the same display screen. Particularly, since the graphics memory is provided with a single Z buffer, which is disposed commonly for the plurality of frame buffers, the required memory volume can be remarkably reduced in comparison with the case that every layer of the plurality of layers of images is provided with the Z buffer respectively.

In an aspect of the image generation method according to the present invention, the Z buffer is cleared, every time when generation of each of the plurality of layers of images by the drawing device is completed by the drawing device.

According to this aspect, since the Z buffer is cleared every time when generation of each of the plurality of layers of images is completed, the hidden surface removal for the plurality of layers of images can be performed without problems using a single Z buffer in the time sharing manner.

In another aspect of the image generation method according to the present invention, the method is further provided with: a drawing object information generation process of generating the drawing object information to generate an image for each object, in a single coordinate system by a predetermined information unit, on the basis of three-dimensional coordinate information about objects included in the 3D image, with regard to at least one layer of the plurality of layers of images; a coordinate transformation information generation process of generating coordinate transformation information to define at least a visual point or a visual range for generating the 3D image; a drawing object information storage process of storing the generated drawing object information; and a coordinate transformation information storage process of storing the generated coordinate transformation information, wherein the plurality of layers of images are sequentially generated by incorporating the stored coordinate transformation information into the stored drawing object information, by the predetermined information unit.

According to this aspect, with regard to at least one layer or preferably every layer of the plurality of layers of images, the data for generating the image is divided into the coordinate transformation information and the drawing object information, each of which is generated, stored and managed by the respective information generating device. On the basis of these stored and managed data, the drawing device generates the 3D image as a display image and outputs it to the display unit. Relating to this, handling separately the coordinate transformation information and the drawing object information and performing the drawing processing based on these information in a batch processing improve the drawing speed of the drawing device.

Particularly, using the drawing object information and the coordinate transformation information as in this aspect allows a layer of 3D image to be generated in a burst-like mode, and thereby a time period required for performing the hidden surface removal in the Z buffer method to generate the layer of 3D image can be shortened. For this, the hidden surface removal for every image layer can be performed without problems using one Z buffer in the time sharing manner.

As discussed above, according to the present invention, the required memory volume of the graphics memory can be reduced, in spite of generation of the multilayer 3D image, since the hidden surface removal is performed using a single Z buffer, which is disposed commonly for the plurality of frame buffers for storing the plurality of layers of 3D images respectively, in a time sharing manner.

The aforementioned and other effects and advantages of the present invention will be apparent from the following "The Best Modes to Carry Out The Present Invention".

### Brief Description of The Drawings

FIG. 1 is a block diagram illustrating a fundamental configuration of an image generating apparatus as a first embodiment of the present invention.
FIG. 2 is a view of illustrating an internal structure of a graphics library in the image generating apparatus.
FIG. 3 is a view of illustrating management of a scene object, in the image generating apparatus.
FIG. 4 is a flow chart showing a process flow of the graphics library.
FIG. 5 is a flow chart showing a process flow of the drawing device in the image generating apparatus.
FIG. 6 is a flow chart showing a process flow of the drawing application processor.
FIG. 7 is a sequential chart showing an operation of the image generating apparatus.
FIG. 8 is an example of generated image.
FIG. 9 is a view showing a construction of a navigation system applied to the image generating apparatus according to the present invention as a second embodiment.

### The Best Modes to Carry Out The Present Invention

The embodiments according to an image generating apparatus and an image generation method as well as a computer program in the present invention are explained below with reference to the drawings. Incidentally, each of the embodiments described below is dedicated to the image generating apparatus of the present invention that is used for an on-vehicle navigation system. Nevertheless, the present invention may be suitably applied to an image generation using a personal computer, to an image generation for a TV game or to other purposes.

### (First Embodiment)

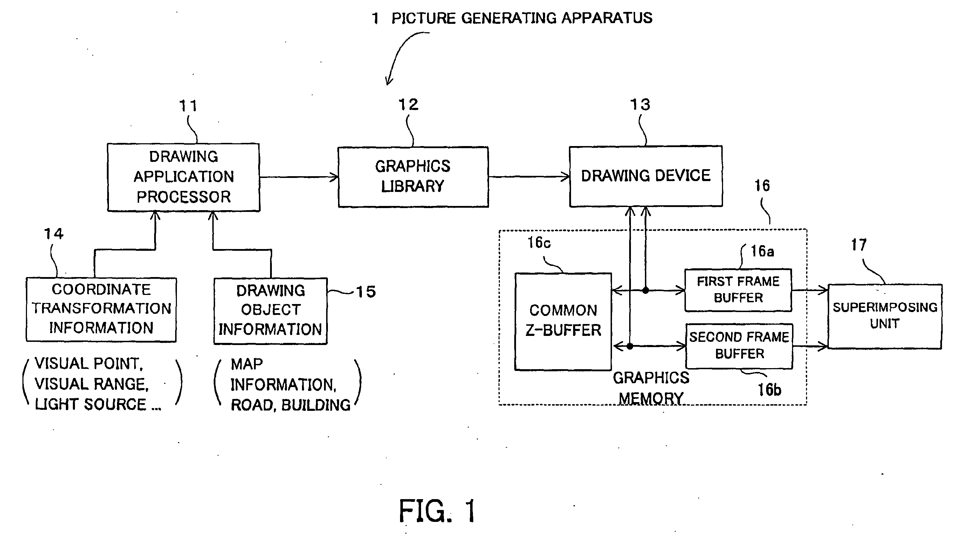

An image generating apparatus in the first embodiment is described below with reference to FIG. 1 to FIG. 8.

Firstly, the fundamental configuration of the image generating apparatus in this embodiment is described with reference to FIG. 1.

In FIG.1, the image generating apparatus 1 is provided with a drawing application processor 11, a graphics library 12, a drawing device 13, a graphics memory 16 and an overlap unit 17. Coordinate transformation information 14 such as a visual point, a visual range, a light source or the like and drawing object information 15 such as a road, a building, map information or the like are inputted into the drawing application processor 11. The graphics library 12 and the drawing device 13 constitute together a system as a unit, which may be optionally replaced as the unit relative to the drawing application processor 11.

Particularly in this embodiment, the image generating apparatus 1 is arranged so as to generate a multilayer 3D image, and a first frame buffer 16a is disposed in the graphics memory 16 in order to generate a 3D image of the first layer by the drawing device 13, and a second frame buffer 16b is disposed in the graphics memory 16 in order to generate a 3D image of the second layer. Then, a single Z buffer 16c is disposed commonly for these two buffers. The Z buffer 16c is used in a time sharing manner as mentioned below for the first frame buffer 16a and the second frame buffer 16b. Then, it is arranged so that the 3D image of the first layer generated in the first frame buffer 16a and the 3D image of the second layer generated in the second frame buffer 16b are overlapped by the overlap unit 17 and then outputted as a single multilayer 3D image on the display unit such as a LCD, a CRT display or the like.

Incidentally, for the sake of convenience in this embodiment, the multilayer 3D image made of two 3D layers is discussed, nevertheless it may be arranged so that the multilayer 3D image made of three or more 3D layers is displayed by disposing three or more frame buffers in the graphics memory 16. Relating to this, it may be arranged so that the Z buffer 16c is used commonly for all frame buffers in a time sharing manner. Nevertheless, if it is arranged so that a single Z buffer is used commonly for at least two frame buffers from among three or more frame buffers, the remarkably effect and advantage of the present invention, i.e. generation of a multilayer 3D image with reduction in the required memory volume in the graphics memory 16 is obtained.

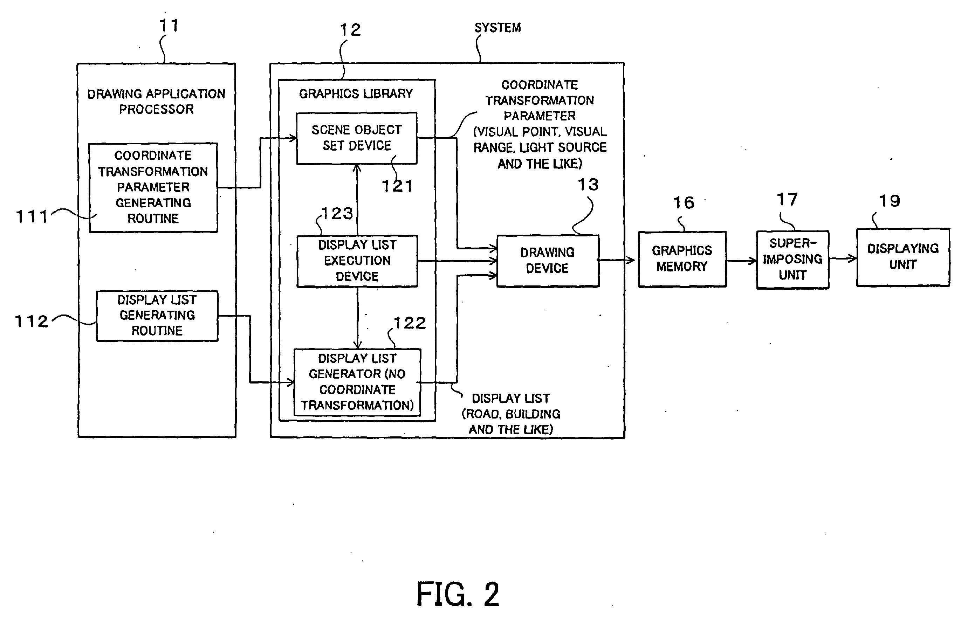

As shown in FIG.2, the drawing application processor 11 has a coordinate transformation parameter generation routine 111 and a display list generation routine 112. The coordinate transformation parameter generation routine 111 generates coordinate transformation data for each of the plurality of layers of 3D images, on the basis of the coordinate transformation information such as the visual point, the visual range, the light source or the like, which is inputted as the coordinate transformation information 14. This data is managed as a scene object in the graphics library 12. An operation of setting parameters for the scene object as well as an operation of applying the scene object to the drawing on the basis of the parameters that is already set, is executed relative to an identifier of the scene object.

On the other hand, for each of the plurality of layers of 3D images, the display list generation routine 112 generates the drawing object information from the road, the building, the map information or the like, and inputs it into the graphics library 12. This drawing object information does not include the coordinate transformation information. The coordinate transformation information is independently set as the scene object as previously discussed. In this way, for each of the plurality of layers of 3D images, the drawing object information and the coordinate transformation information are generated independently of each other, but the former is incorporated into the latter to generate the image, if needed. This allows the above-mentioned replacement of the system and an improvement in the drawing speed.

Next, the graphics library 12 has a scene object set device 121, a display list preparation device 122 and a display list execution device 123.

The scene object set device 121 stores and manages the coordinate transformation information that is generated through the coordinate transformation parameter generation routine 111 in the drawing application processor 11, for each of the plurality of layers of 3D images, into the scene object corresponding to the identifier that is designated by the drawing application.

The display list preparation device 122 prepares, for each of the plurality of layers of 3D images, a display list that is generated through the display list generation routine 112 in the drawing application processor 11 so as to be directly and collectively (in a batch processing) executed for the higher speed drawing by the drawing device 13.

On the other hand, the display list execution device 123 controls the drawing device 13, for each of the plurality of layers of 3D images, while making the scene object set device 121 and the display list preparation device 122 send the display list and the coordinate transformation parameters, both of which are processed so as to allow the batch processing of the coordinate transformation information and the drawing object information, into the drawing device 13 to execute the drawing operation.

In this graphics library 12 also, for each of the plurality of layers of 3D images, the coordinate transformation information and the drawing object information are separately stored, and when the image is to be generated, in the drawing device 13, the coordinate transformation information are incorporated into the drawing object information to perform the coordinate transformation and generate 3D images of each layer by adding conditions such as the visual point, the visual range, the light source or the like, which are set as the scene objects. Therefore, for each of the plurality of layers of 3D images, the drawing object information stored in a single display list is formed as a display list on the basis of a single coordinate system independent of the visual point or the visual range.

The 3D image of the first layer that is generated at the drawing device 13 is stored in the corresponding first frame buffer 16a and is subjected to the hidden surface removal by means of the Z buffer 16c. Relating to this, since the drawing device 13 generates the 3D image of the first layer by incorporating the coordinate transformation information into the drawing object information, the 3D image of the first layer is generated in a burst-like mode. After the generation of the 3D image of the first layer is completed, the 3D image of the second layer that is generated at the drawing device 13 is stored in the corresponding second frame buffer 16b and is subjected to the hidden surface removal by means of the Z buffer 16c. After the generation of the 3D image of the second layer is completed, these two 3D image layers stored in the first frame buffer 16a and the second frame buffer 16b are overlapped in the overlap unit 17 to generate the multilayer 3D image, which is inputted into and displayed on the display unit 19. Particularly, since the generation of 3D image in each layer is performed in the burst-like mode, the Z buffer 16c can be utilized in the time sharing manner, and thereby three or more 3D images can be adequately overlapped while the hidden surface removal is performed by means of a single Z buffer 16c.

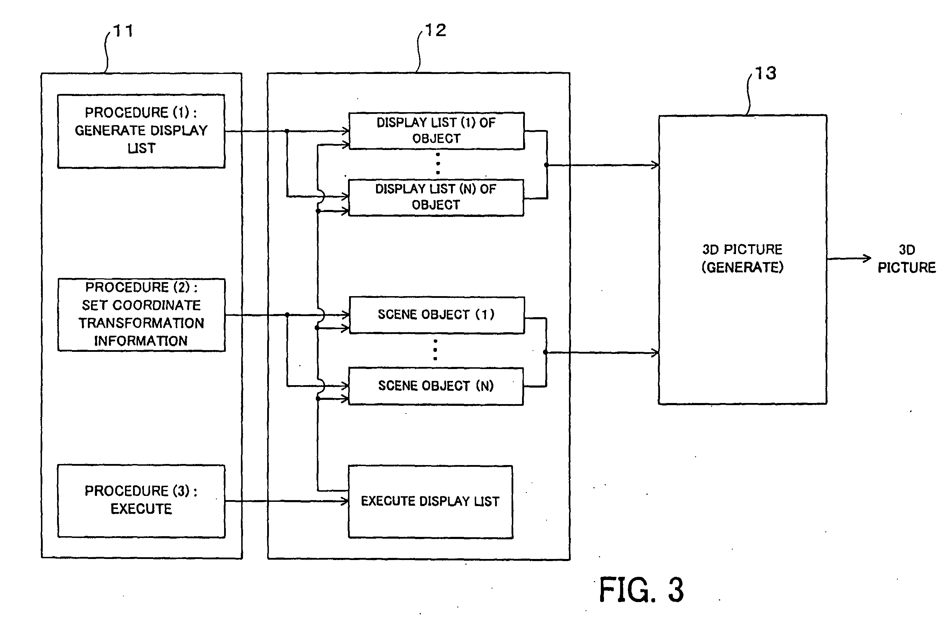

Next, referring to FIG. 3, the procedure for generating the 3D image in each layer is described below. At first, at the drawing application processor 11, a display list is generated for the 3D image of the first layer (Procedure #1). The generated display list is stored as an object display list #1 in the graphics library 12. Next, coordinate transformation information is set (Procedure #2). The coordinate transformation information is stored in a scene object #1. Next, a command or instruction to generate the image is provided (Procedure #3). The object display list #1 and the scene object #1 in the graphics library 12 are accessed to input the data into the drawing device 13 to generate the 3D image of the first layer in the frame buffer 16a, while the hidden surface removal is performed by means of the Z buffer 16c. Then, the same drawing procedure is applied also to the 3D image of the second layer, and to the third or later layer if exists.

The drawing device 13 has the 3D coordinate transformation function, and thereby generates and displays the drawing object information in three dimension, such as a 3D scene ahead of the driver during the driving, on the basis of the coordinate transformation parameters that is designated by the identifiers, for example on the basis of the driver's view (visual point and visual range), the light source or the like if the vehicle is running. Relating to this, a plurality of display lists and a plurality of scene objects may be generated and stored in advance so as to generate the image from the combination of them as appropriate.

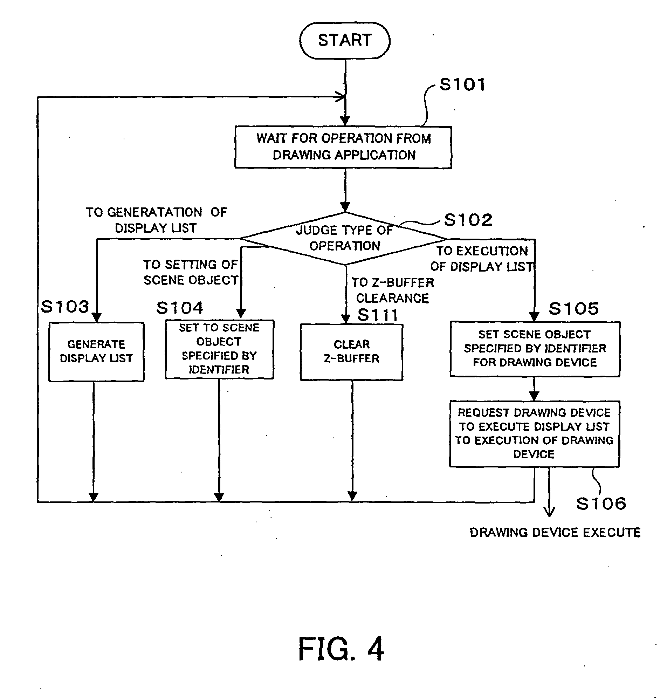

Next, the operational flow of the graphics library 12 is described below with reference to FIG.4.

At first, if there is an operation input in a waiting state that is waiting for the operation input from the drawing application processor 11 (step S101), a type of the operation is judged (step S102). The type of the operation in the graphics library 12 may be the display list preparation, the scene object setting, the Z buffer clearance or the display list execution, as mentioned above.

If a command or instruction for the display list preparation is provided, the display list is generated on the basis of the drawing object information such as roads, buildings and the like (step S103). Once the display list is generated, the process goes back to the step S101 and waits for the next operation input.

As a result of the judgement at the step S102, if the operation input is for the scene object setting, the scene object that is designated by the identifier of the coordinate transformation information, such as the driver's view (visual point and visual range), the light source or the like, is set (step S104). Once the scene object setting is completed, the process goes back to the step S101 again, and waits for the next operation input.

As a result of the judgement at the step S102, if the operation input is for the display list execution, the scene object that is designated by the identifier is set for the drawing device 13 (step S105), and a request for the display list execution is sent to the drawing device 13 (step S106).

As a result of the judgement at the step S102, if the operation input is for clearing the Z buffer, the Z buffer 16c in the graphics memory 16 is cleared (step S111). This operation input for clearing the Z buffer is executed when an image generation of a 3D image layer is completed after the execution of the step S106.

After that, the process goes back to the step S101 and waits for the next operation input. The drawing device 13 executes the display lists in a batch processing to generate the image. The execution procedure is in line with the execution procedures described with reference to FIG. 3.

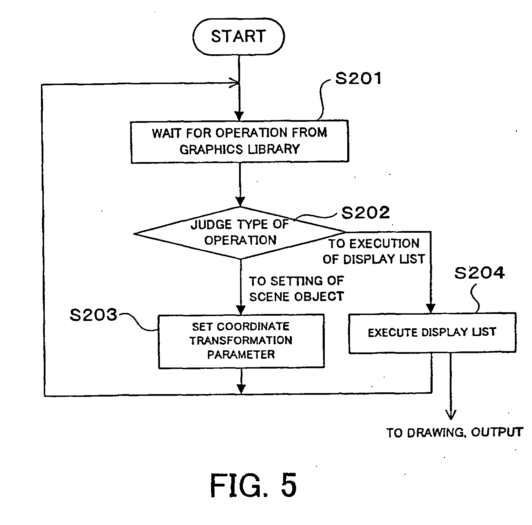

The operational flow of the drawing device 13 is described below with reference to FIG. 5.

At first, if there is an operation input in a waiting state that is waiting for the operation input from the graphics library 12 (step S201), a type of the operation is judged (step S202). The type of the operation may be the scene object setting and the display list execution.

If the operation input is for setting the scene object, the drawing device 13 sets the coordinate transformation parameters based on the identifiers (step S203). Once the coordinate transformation parameter setting is completed, the process goes back to the step S201 again and waits for the next operation input.

As a result of the judgement at the step S202, if the operation input is for executing the display list, the image generation is performed, on the basis of the coordinate transformation parameters and the display list. The generated image is outputted from the drawing device 13 and stored in the frame buffers 16a and 16b. Relating to this, the hidden surface removal is performed by means of the Z buffer 16c.

Then, by repeating the aforementioned procedure, a plurality of layers of 3D images are generated in the first frame buffer 16a and the second frame buffer 16b respectively, and finally overlapped by the overlap unit 17 to thereby generate a single multilayer 3D image.

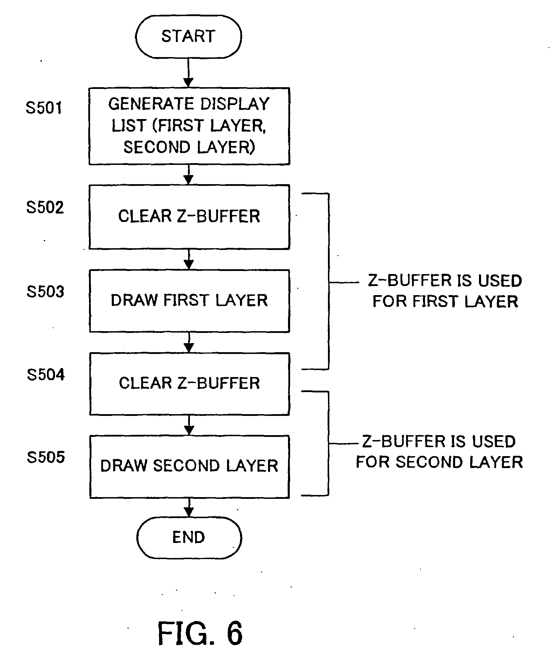

Next, the operational flow of the drawing application processor 11 is discussed, with reference to FIG. 6.

Firstly, by means of the display list generation routine 112, display lists are generated respectively for the 3D image of the first layer and the 3D image of the second layer. Then, the corresponding coordinate transformation parameters are generated by means of the coordinate transformation parameter generation routine 111 (step S501).

Once the generation of the display list and the coordinate transformation parameters required for generating a single multilayer 3D image is completed, a command to clear the Z buffer 16c is then emitted via the graphics library 12. Thereby, the Z buffer 16c is cleared (step S502).

Next, the 3D image of the first layer is generated, by incorporating the corresponding coordinate transformation parameters generated at the step S501 into a part of the display list relating to the 3D image of the first layer also generated at the step S501. Relating to this, the hidden surface removal is executed, by means of the Z buffer 16c cleared at the step S502 (step S503). More specifically, this hidden surface removal (i) compares sequentially at every drawing position, a plurality of partial frame images, which constitute a 3D image frame such as an image of a road, a building, another building, the sky and the like, and which form an image frame of a scene, and (ii) stores the frontmost image part at the same drawing position for every drawing position. Then, finally at every drawing position, one 3D image frame is generated from the frontmost image parts.

In this way, after the generation of the 3D image of the first layer, for which the hidden surface removal has been executed by means of the Z buffer is completed, the Z buffer 16c is cleared again (step S504).

Next, the 3D image of the second layer is generated by incorporating the corresponding coordinate transformation parameters generated at the step S501 into a part of the display list relating to the 3D image of the second layer generated also at the step S501. Relating to this, the hidden surface removal is executed by means of the Z buffer 16c that has been cleared at the step S504 (step S505).

Thus, the 3D image in each layer is generated respectively in the first frame buffer 16a and the second frame buffer 16b, and finally overlapped by the overlap unit 17 to thereby generate one multilayer 3D image. In this way, a single Z buffer 16c is used in a time sharing manner to generate the 3D images in each layer, and thereby used commonly for the plurality of frame buffers.

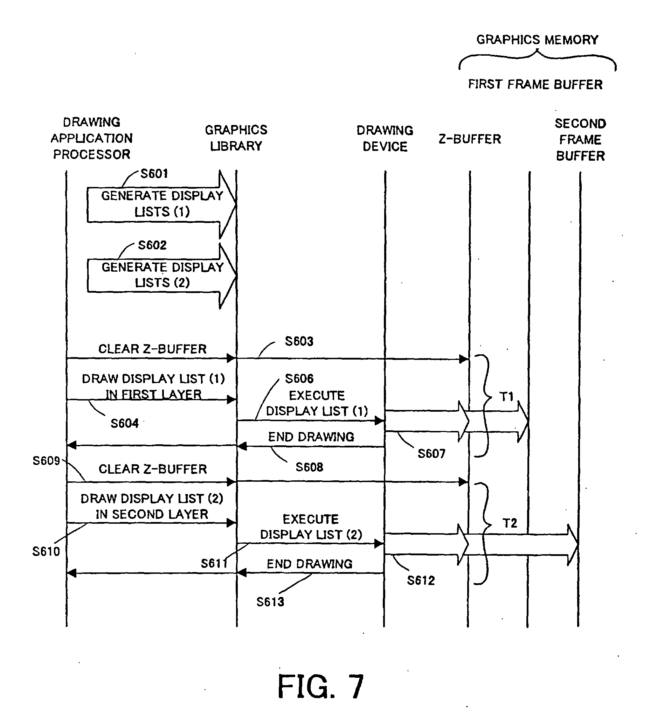

The operation of the image generating apparatus is described below in chronological order with reference to a sequence chart of FIG. 7. This sequence chart shows, in chronological order, an inter-relationship among the drawing application processor 11, the graphics library 12, the drawing device 13 and the graphics memory 16, in which horizontal lines are representative of the inter-relationship, while vertical lines are representative of a lapse of time in a line from the top to the bottom.

At first, a display list #1 relating to the 3D image of the first layer is generated in the drawing application processor 11 and inputted into the graphics library 12 (step S601). Before or after this, the coordinate transformation parameters, i.e. identifiers are set in the drawing application processor 11, and an instruction to set the scene object including these identifiers is issued to the graphics library 12.

Next, a display list #2 relating to the 3D image of the second layer is generated in the drawing application processor 11 and inputted into the graphics library 12 (step S602). Before or after this, the coordinate transformation parameters, i.e. identifiers are set in the drawing application processor 11, and an instruction to set the scene object including these identifiers is issued to the graphics library 12.

Next, the drawing application processor 11 clears the Z buffer 16c via the graphics library 12 (step S603).

Then, the drawing application processor 11 issues an instruction of image generation with incorporating the set scene object into the display list #1 relating to the generated 3D image of the first layer, to the graphics library 12 (step S604).

In response to the aforementioned instructions, the graphics library 12 supplies the display list #1 relating to the 3D image of the first layer with the corresponding scene object to the drawing device 13, and instructs the drawing device 13 to execute the display list #1 (step S606).

In response to the instruction, the drawing device 13 executes the display list #1 on the basis of the coordinate transformation parameters of the corresponding scene object to generate the 3D image of the first layer in the first frame buffer 16a, with executing the hidden surface removal using the Z buffer 16c (step S607). Once image generation is completed in the first frame buffer 16a, the completion of the image generation is informed to the graphics library 12 and the drawing application processor 11 (step S608).

In response to this, the drawing application processor 11 clears again the Z buffer 16c via the graphics library 12 (step S609).

Then, the drawing application processor 11 instructs the graphics library 12 to generate an image with incorporating the set scene object into the display list #2 relating to the generated 3D image of the second layer (step S610).

In response to the aforementioned instructions, the graphics library 12 supplies to the drawing device 13 the display list #2 relating to the 3D image of the second layer with the corresponding scene object and instructs the drawing object 13 to execute the display list #2 (step S611).

In response to this instruction, the drawing device 13 executes the display list #2, on the basis of the coordinate transformation parameters of the corresponding scene object to generate the 3D image of the second layer in the second frame buffer 16b, with executing the hidden surface removal using the Z buffer 16c (step S612). Once the image generation is completed in the second frame buffer 16ba, the completion of the image generation is informed to the graphics library 12 and the drawing application processor 11 (step S613), a drawing completion processing is executed and the 3D images of the first and second layers that are respectively stored in the first frame buffer 16a and the second frame buffer 16b are overlapped in the overlap unit 17 to generate and output (display) the multilayer 3D image.

Incidentally, the drawing application processor 11 may judge whether or not the next visual range is covered within the display lists #1 or #2 at the present, with regard to any of 3D image. Then, if the next range can be covered, the next 3D image can be generated, using the same display list.

As mentioned above, in FIG. 7, one Z buffer 16c is used to generate the 3D image of the first layer during a time period T1, and further used to generate the 3D image of the second layer during a time period T2.

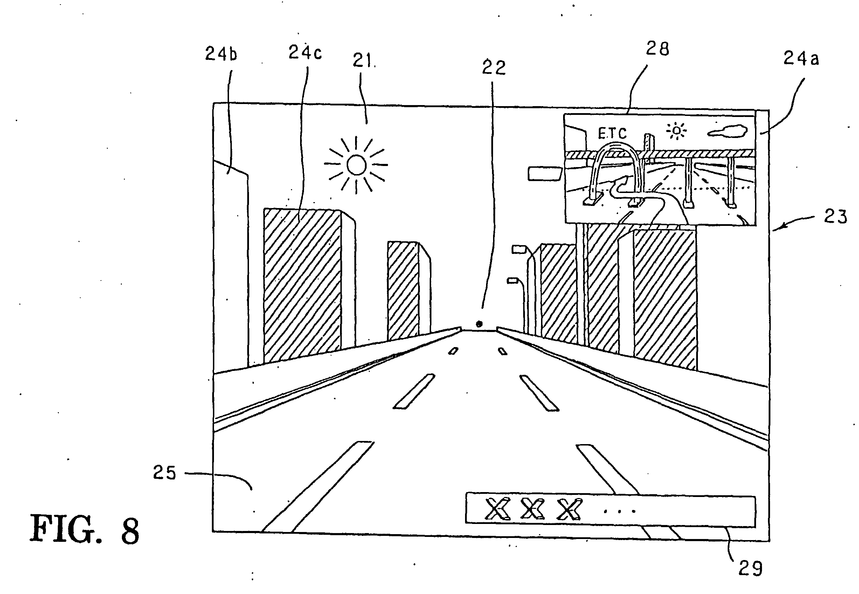

FIG. 8 is an example of a display of the multilayer 3D image that is generated as mentioned above, showing a scene based on a driver's view from the inside of the vehicle that is running on a road in a town, as a main image of the 3D image of the first layer. In the figure, a light source 21, a visual point 22, a visual range 23 or the like is representative of the coordinate transformation information that is designated by the identifier to be incorporated into the scene object, while a building 24a, 24b, 24c...., a road 25 or the like is representative of the drawing object information. The light source 21 may be the sun (during the daytime), or a streetlamp (during the nighttime), whose position or lighting direction constitutes a parameter. On the other hand, the visual point 22 may be a point corresponding to the driver's visual point, allowing the driver to view the scene on the display unit as if it were a real scene around the vehicle. The visual range 23 is for defining a predetermined image range, which is suitably set for the driver.

On the other hand, the buildings 24a, 24b, 24c....., the road 25 or the like is representative of the drawing object information, and the display list relating to the drawing information is adapted so as to be executed directly by the drawing device. Such drawing object information may be the information that is supplied from a map information database or the like belonged to the navigation system. Further, with regard to a format as the drawing object information, it is represented in a form employing only a coordinate system without the coordinate transformation information.

In FIG. 8, on the basis of the information from the scene object, the light source 21 (the sun in this case) is ahead of the driver, while the side of the buildings 24a, 24b, 24c,..... that faces the driver is darkly shaded. On the other hand, the coordinate transformation is executed so that the drawing object such as the building 24a, 24b, 24c,....., the road 25 or the like within a range that is defined by the visual range 23 is converged in perspective on the visual point 22 that is located above the road 25.

Particularly in this embodiment, although the main image is the first 3D image that is subjected to the hidden surface removal using the Z buffer, a sub image 28 of the second 3D image is depicted at the upper right in the main image. The sub image 28 is depicted as an appearance of a tollgate in 3D image, and nothing else but a 3D image that is subjected to the hidden surface removal using the Z buffer as mentioned above.

Incidentally, in this embodiment, a sub image 29 for displaying text information is depicted at lower right in the main image, and the sub image 29 may be also depicted as a 3D image that is subjected to the hidden surface removal using the Z buffer (e.g. 3D text).

As mentioned above, by using one Z buffer in a time sharing manner, the multilayer 3D image can be displayed, while the required memory volume is prevented from increasing, and therefore, the image generating apparatus according to this embodiment is suitable for a use in that reduction in the required memory volume for the graphics purpose is important, such as a use in a car navigation system or the like. Furthermore, handling separately the drawing object information and the coordinate transformation information facilitates the image generation with the coordinate transformation of the image at high speed and the image generation of the same object with different coordinates with alteration to the coordinate transformation information. Furthermore, separation of the drawing object information and the coordinate transformation information allows selection or replacement of the drawing device.

### (Second Embodiment)

Next, an embodiment wherein the above-mentioned image generating apparatus is applied to a navigation system for a movable body is discussed below. As discussed below in detail, various functions of the navigation system are closely related to the image generating apparatus and therefore incorporated into the same. Incidentally, the configuration and operation of the image generating apparatus in itself are of those mentioned above, for which the explanation is not repeated, but the explanation mentioned above is to be referred as appropriate.

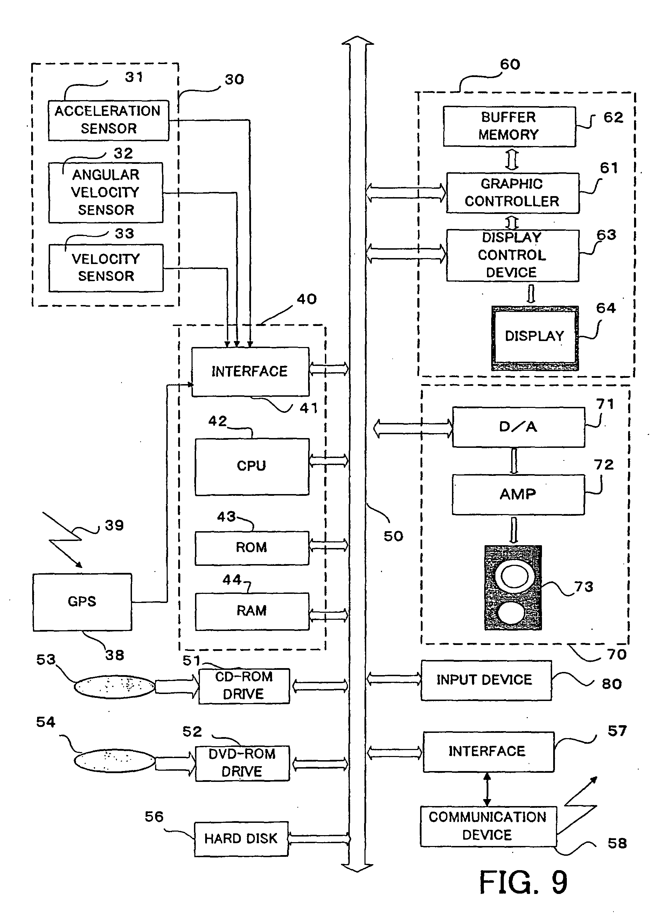

Firstly, the navigation system that is applied to the present embodiment is described in its outline, with reference to FIG. 9.

The navigation system is provided with a self-contained positioning apparatus 30, a GPS receiver 38, a system controller 40, an input/output (I/O) circuit 41, a CD-ROM drive 51, a DVD-ROM drive 52, a hard disk device (HDD) 56, a wireless communication device 58, a display unit 60, an audio output unit 70, an input device 80 and an external interface (I/F) unit 81, all of which are respectively connected to a bus line 50 for transferring control data and process data.

The self-contained positioning apparatus 30 is provided with an acceleration sensor 31, an angular rate sensor 32 and a velocity sensor 33. The acceleration sensor 31, for example made of a piezoelectric element, outputs an acceleration data that is obtained by detecting an acceleration of a vehicle. The angular rate sensor 32, for example made of a vibratory gyroscope, outputs an angular rate data and a relative azimuth data of a vehicle that is obtained by detecting the angular rate of the vehicle when a direction of the vehicle is changed. The velocity sensor 33 detects a rotation of a vehicle mechanically, magnetically or optically and outputs a pulse signal having a pulse number that corresponds to a velocity of the vehicle, every time when the rotation of a predetermined angle is detected about a vehicle shaft.

The GPS receiver 38 has a known configuration provided with a plane polarization non-directional reception antenna (heimen-henpa-mushikousei-jushin-antena) and a high frequency reception processor, and further a digital signal processor (DSP) or a micro processor unit (MPU), a V-RAM, a memory and so on. The GPS receiver 38 is arranged to receive electric waves from at least three GPS satellites orbiting around the earth, for a position calculation and a travel velocity azimuth calculation, through a spread spectrum demodulation (supekutoru-gyaku-kakusan), a distance measurement, a Doppler measurement and an orbit data processing, and output the resultant absolute position information of the receive point (a vehicle running point) continuously or consecutively from the I/O circuit 41 into the bus line 50, so that the system controller 40 takes the absolute position information to display on the road map of the screen.

The system controller 40, which is provided with a CPU 42, a ROM 43 (that is a non-volatile solid memory device) and a working RAM 44, exchanges data with each unit or device that is connected to the bus line 50. The processing control through this data exchange is executed by a control program and a boot program that are stored in the ROM 43. The RAM 44 temporarily stores setting information and the like for changing a map display (changing between a whole map display and an area map display) in accordance with the user's operation via the input device 80.

The CD-ROM drive 51 and the DVD-ROM drive 52 read and output each of map database information (e.g. various road information such as the number of lanes, a road width or the like in the map information (map folio)) from the CD-ROM 53 and the DVD-ROM 54 in which the map database information is stored respectively.

The HDD 56 is operative to store the map (image) data that is read at the CD-ROM drive 51 or the DVD-ROM drive 52, and to read it at any time point later than this storing process. Further, the HDD 56 is also operative to store audio data or video data that is read from the CD-ROM drive 51 or the DVD-ROM drive 52. Thereby, for example, audio output or video output is allowed by reading the audio data or video data that is stored in the HDD 56, while the navigation processing is executed by reading the map data from the CD-ROM 53 or the DVD-ROM 54. Alternatively, the navigation processing is allowed by reading the map data that is stored in the HDD 56, while the audio output or video output is executed by reading the audio data or video data from the CD-ROM 53 or the DVD-ROM 54.

The display unit 60 displays various processing data on the scene under control of the system controller 40. With regard to the display unit 60, a graphic controller 61 disposed therein controls each part of the display unit 60, on the basis of the control data that is transferred from the CPU 42 via the bus line 50. Additionally, a buffer memory 62 such as V-RAM temporarily stores image information for a real-time display. Further, a display controller 63 controls the display processing to display the image data, which is outputted from the graphic controller 61, on the display member 64. This display member 64 may be disposed near a front panel in the vehicle.

With regard to the audio output unit 70, a D/A converter 71 converts the audio signal that is transmitted via the bus line 50 under control of the system controller 40 into the digital signal, while a variable amplifier (AMP) 72 variably amplifies the analog signal that is outputted from the D/A converter 72 to output to a speaker 73, from which the sound is outputted.

The input device 80 is provided with keys, switches, buttons, remote controllers and audio input devices, for inputting various commands or data. The input device 80 is disposed around a display 64 or a front panel of a body of the on-vehicle type electronic equipment that is mounted in the vehicle.

Here, in the case that the image generating apparatus according to the present invention is applied to a navigation system, it is required to appropriately display an image in agreement with a drive route. That is, it is desirable to display an image in three dimensions that is seen from the driver who is driving the vehicle on the road. Moreover, it is useful for the safety to inform the driver an image around a coming corner or a sight ahead of an unclear passage, which is displayed in three dimensions. Furthermore, it is required to display various superimposed messages on each image.

Therefore, the image generating apparatus according to the present invention can provide a remarkably effective navigation system by forming an integral system incorporating various devices and functions of a navigation system.

Next, incorporating various devices and functions of the navigation system with the image generating apparatus is discussed, with regard to the components.

The image generating apparatus captures separately the coordinate transformation information including the visual point, the visual range, the light source and the like, and the drawing object information including roads, buildings and the like at the drawing application processor 11, and then generates data as drawing data from each of these information at the graphics library 12, and then generates an image from these individual information at the drawing device 13, as mentioned above.

Firstly, the drawing object information is map information including roads and buildings available from a map database contained in the navigation system. The map information is stored in the CD-ROM 53 as well as DVD-ROM 54 which is readable using the CD-ROM drive 51 as well as DVD-ROM drive 52. Alternatively, the map information may be available from a predetermined web site via a communication device 58 to store into or use from the HDD 56. Alternatively, the map information of the drive route that is read using the CD-ROM drive 51 or the DVD-ROM drive 52 may be stored and then read at any desired time point later than this storing. This operation may be executed when a drive plan is made up.

The map information mentioned above, which is divided into a plurality of areas and designated by a coordinate system for each area, is transformed into only one coordinate system independent of the position of the visual point or the visual range by the display list generating routine 112 of the drawing application processor 11 in the image generating apparatus, in order to send an instruction to the display list preparation device 122 in the graphics library 12, where the map information is listed into the display list and stored (managed).

Next, relating to the coordinate transformation information that is involved in the image generating apparatus, such as the visual point, the visual range, the light source and so on, it is required to know a current position of the vehicle during the driving, which is determined from a self-contained positioning apparatus 30 or a GPS receiver 38 of the navigation system. From a comparison of a determined current position with the map information, a travel direction of the vehicle, and an appropriate visual point and visual range are determined. The visual point and visual range may be positioned at a predetermined position or range, or may be set manually.

On the other hand, once the travel direction of the vehicle and the present time are known, the bearing of the sun can be determined taking account of the seasonal factor, and a position of the light source can also be determined by assuming the bearing of the sun as the light source. Similarly, in the case that a scene around a spot that is desired to be reached after a predetermined time period is required, the bearing of the sun can be determined by designating the spot and the arrival time, and therefore an image that takes an effect of the position of the light source at the arrival time can be viewed.

Alternatively, a change of the shade from sunrise to sunset in the scene can be viewed, by incorporating the coordinate transformation information into the drawing object information with a condition of time that passes from moment to moment. Furthermore, the 3D image can be changed successively by changing the other coordinate transformation information successively. Particularly, in the case that a 3D image corresponding to a scene is to be displayed when the vehicle is running continuously on a road, the 3D image can be displayed efficiently and continuously by changing the coordinate transformation information in accordance with the driving while the drawing object information is fixed, as discussed above.

As mentioned above, the scene object as the coordinate transformation information can be determined by using the function of the navigation system, while the drawing object information can be determined by using the map information. Therefore, a 3D image can be generated from both the coordinate transformation information and the drawing object information, which are independent of each other, and the 3D image is directed to the display unit 60 of the navigation system, where the graphics controller 61 stores it in the buffer memory 62 that employs the V-RAM or the like, and further the 3D image is read from the buffer memory 62 to be displayed on the display 64 via the display controller 63.

Hereinabove, the image generating apparatus of the present invention has been discussed in the case that it is applied to the navigation system, nevertheless, it is not limited to this embodiment, and also suitable for an image generation in a personal computer, a work station, a mobile, a cell phone and the like, an image generation in a TV game, an arcade game, a mobile game and the like, and an image generation in a drive simulation device or a training device for various vehicle such as a automobile, a motorcycle, a plane, a helicopter, a rocket, a ship and the like.

Furthermore, the present invention is not limited to the above-mentioned embodiments but may be changed as appropriate in a range without departing from a spirit or essence of the present invention deduced from the claims and the whole specification, and such a changed image generating apparatus and method, electronic device and computer program are all encompassed within a technical concept of the present invention.

### Industrial Applicability

The present invention is applicable to an image generation in a navigation system, a personal computer, a cell phone and the like, an image generation in a TV game, a mobile game and the like, and an image generation in a drive simulation device or a training device for various vehicle such as a automobile, a plane, a ship and the like.

## Claims

1. An image generating apparatus **characterized in that** said apparatus comprises:
a graphics memory including (i) a plurality of frame buffers for storing a plurality of layers of images including a 3D image separately and (ii) one Z buffer commonly disposed for the plurality of frame buffers; and
a drawing device for (I) sequentially generating the plurality of layers of images while applying thereto a hidden surface removal using said one Z buffer in a time sharing manner, (II) sequentially storing the plurality of layers of images into the plurality of frame buffers, and (III) overlapping the plurality of layers of images that are stored in the plurality of frame buffers and to which the hidden surface removal has been applied, to thereby generate a multilayer 3D image.

2. The image generating apparatus according to claim 1, **characterized in that** the Z buffer is cleared every time when generation of each of the plurality of layers of images is completed by said drawing device.

3. The image generating apparatus according to claim 1 or 2, **characterized in that** said drawing device generates an image in perspective with regard to at least one layer of the plurality of layers of images.

4. The image generating apparatus according to claim 1 or 2, **characterized in that** said apparatus further comprises:
a drawing application processor including (i) a drawing object information generating device for generating drawing object information to generate an image for each object in a single coordinate system by a predetermined unit, on the basis of three-dimensional coordinate information about the object included in the 3D image, with regard to at least one layer of the plurality of layers of images, and (ii) a coordinate transformation information generating device for generating coordinate transformation information to define at least a visual point and a visual range for generating the 3D image;
a graphics library including (I) a drawing object information storing device for storing the generated drawing object information and (II) a coordinate transformation storage device for storing the generated coordinate transformation information, wherein
said drawing device generates the plurality of layers of images sequentially by incorporating the stored drawing object information into the stored coordinate transformation information by the predetermined unit.

5. The image generating apparatus according to claim 4, **characterized in that** said drawing application processor re-generates the coordinate transformation information, while the drawing object information is maintained, with regard to an object included in both of two 3D images in series that change sequentially with the course of time, for at least one layer of the plurality of layers of images.

6. The image generating apparatus according to claim 4, **characterized in that** said drawing application processor and said graphics library generate and store the drawing object information and the coordinate transformation information about the plurality of layers of images in a multi-task mode.

7. The image generating apparatus according to claim 4, **characterized in that** with regard to at least one layer of the plurality of layers of images,
a plurality of coordinate transformation information generated by the coordinate transformation information generating device are stored into the coordinate transformation information storage device,
a plurality of drawing object information generated by said drawing object information generating device are stored into said drawing object information storing device, and
said drawing device generates an image from a desired combination of the coordinate transformation information and the drawing object information.

8. The image generating apparatus according to claim 4, **characterized in that** said drawing application processor executes:
a list preparation program for preparing the drawing object information
a clear program for clearing the Z buffer; and
an execution instruction program for instructing a drawing in said drawing device.

9. The image generating apparatus according to claim 4, **characterized in that** said graphics library comprises:
a function for managing the drawing object information,
a function for controlling said graphics memory, and
a function for controlling said drawing device.

10. The image generating apparatus according to claim 4, **characterized in that** said drawing application processor comprises a function for being supplied with map information including the three-dimensional coordinate information from a map database incorporated within a navigation system, with regard to at least one of the plurality of layers of images.

11. The image generating apparatus according to claim 4, **characterized in that** the coordinate transformation information includes information to define a light source, in addition to information to define the visual point and the visual range, with regard to at least one lof the plurality of layers of images.

12. The image generating apparatus according to claim 4, **characterized in that** the visual point is set on the basis of a visual point of a driver of a vehicle, with regard to at least one layer of the plurality of layers of images.

13. The image generating apparatus according to claim 4, **characterized in that** the visual range is set on the basis of a visual range of a driver of a vehicle, with regard to at least one layer of the plurality of layers of images.

14. An electronic equipment **characterized in that** said equipment comprises:
the image generating apparatus according to claim 1 or 2; and
a display device for visually outputting a multilayer 3D image generated by said drawing device.

15. A computer program **characterized in that** said program makes a computer function as an image apparatus according to any one of claims 1 to 13.

16. An image generation method in an image generating apparatus having (i) a graphics memory including a plurality of frame buffers for storing a plurality of layers of images including a 3D image separately, and (ii) a drawing device for generating a multilayer 3D image by overlapping the plurality of layers of images, **characterized in that** said method comprises:
a process of sequentially generating the plurality of layers of images while applying thereto a hidden surface removal using said one Z buffer in a time sharing manner, and sequentially storing the plurality of layers of images into the plurality of frame buffers , and
a process of overlapping the plurality of layers of images that are stored in the plurality of frame buffers and to which the hidden surface removal has been applied.

17. The image generation method according to claim 16, **characterized in that** the Z buffer is cleared, every time when generation of each of the plurality of layers of images is completed by said drawing device.

18. The image generation method according to claim 16 or 17, **characterized in that** said method further comprises:
a drawing object information generation process of generating the drawing object information to generate an image for each object, in a single coordinate system by a predetermined information unit, on the basis of three-dimensional coordinate information about objects included in the 3D image, with regard to at least one layer of the plurality of layers of images;
a coordinate transformation information generation process of generating coordinate transformation information to define at least a visual point or a visual range for generating the 3D image;
a drawing object information storage process of storing the generated drawing object information; and
a coordinate transformation information storage process of storing the generated coordinate transformation information, wherein
the plurality of layers of images are sequentially generated by incorporating the stored coordinate transformation information into the stored drawing object information, by the predetermined information unit.
